Europäisches Patentamt

(19) European Patent Office

Office européen des brevets

(11) Numéro de publication : **0 307 315 B1**

# (12) FASCICULE DE BREVET EUROPEEN

(45) Date de publication du fascicule du brevet :
11.12.91 Bulletin 91/50

(51) Int. Cl.⁵ : **B32B 19/02, B32B 15/14**

(21) Numéro de dépôt : 88402263.3

(22) Date de dépôt : 08.09.88

(54) **Panneaux composites thermoformes.**

(30) Priorité : 10.09.87 FR 8712548

(43) Date de publication de la demande :
15.03.89 Bulletin 89/11

(45) Mention de la délivrance du brevet :
11.12.91 Bulletin 91/50

(84) Etats contractants désignés :
AT BE DE ES GB IT NL SE

(56) Documents cités :
FR-A- 2 130 680
GB-A- 1 310 355
GB-A- 1 592 916
US-A- 4 310 585

(73) Titulaire : ISOVER SAINT-GOBAIN
Les Miroirs 18, avenue d'Alsace
F-92400 Courbevoie (FR)
Titulaire : KERLANE
" Les Miroirs " 18 Avenue d'Alsace
F-92400 Courbevoie (FR)

(72) Inventeur : De Sech, Alain
24 Chemin du Grand Bois
F-69160 Tassin la Demi-Lune (FR)
Inventeur : Boilly, Pierre-François
18, Rue Bel Air
F-51160 Champillon (FR)
Inventeur : Gest, René
14 Bis, Rue Edouard Vaillant
F-60290 Rantigny (FR)
Inventeur : Egly, Pierre
2, Rue Raymond Maillet
F-60290 Rantigny (FR)

(74) Mandataire : Le Vaguerèse, Sylvain Jacques
et al
SAINT-GOBAIN RECHERCHE 39, quai Lucien
Lefranc
F-93300 Aubervilliers Cédex (FR)

## Description

L'invention concerne un panneau composite thermoformé comportant au moins deux couches à base de fibres liées utilisable notamment comme écran thermique pour l'isolation d'éléments de moteur ou autres d'un véhicule automobile.

Des panneaux composites à base de fibres minérales du type fibres de verre liées par une résine organique thermodurcissable servent par exemple de baffles, de sous-capot, de garnitures intérieures de pavillons de véhicules automobiles. Ils sont fabriqués par thermoformage d'un primitif, constitué par une ou plusieurs couches de fibres imprégnées d'un liant au plus partiellement polymérisé, revêtu au moins sur une de ses faces d'une feuille de parement, par exemple en tissu. De tels panneaux, d'épaisseur variable, sont rigides et présentent une bonne tenus mécanique. Toutefois, le risque de dégradation du liant organique par décomposition thermique interdit leur utilisation auprès de pièces exposées en continu à plus de 300°C. De ce fait, de tels panneaux composites ne satisfont pas aux exigences requises pour un écran thermique protégeant par exemple un turbocompresseur, qui fonctionne pour des véhicules de tourisme à un peu plus de 700°C, un pot d'échappement catalytique dont l'efficacité maximale est obtenue avec des gaz à environ 700°C ou même pour le capotage par le dessous du moteur en vue d'une meilleure pénétration dans l'air du véhicule.

Pourtant, de nombreuses fibres supportent de telles températures. Citons par exemple les fibres de roche basaltique ou de laitier, les fibres de silicoalumineuses (fibres céramique), les fibres d'amiante, etc... Les fibres de verre elles-mêmes résistent sans problème à des températures voisines de 450°C. La difficulté est de trouver un liant satisfaisant, or pour de telles températures, il faut employer un liant minéral le plus souvent du type argileux tel qu'un silicate alcalin, un silicate d'éthyle, un phosphate d'alumine ou encore de l'alumine colloïdale. Ces liants sont efficients jusqu'à 700-1200°C mais malheureusement, les produits en forme obtenus sont assez friables et ne conviennent qu'à des applications statiques et non dans des milieux fréquemment en vibration tels des véhicules automobiles.

Le Brevet US-A-4,310,585 propose un panneau isolant bicouche, constitué d'une couche de fibres minérales imprégnées d'un liant minéral et d'une couche de fibres minérales imprégnées d'un liant organique, la première couche étant en contact avec l'élément chaud. Ce procédé de fabrication est complexe et comporte au minimum deux étapes, comprenant tout d'abord le moulage à chaud de la première couche pour réticuler le liant organique, puis l'imprégnation de la deuxième couche par le liant minéral.

Le brevet FR-A-2 130 680 décrit un panneau anti-feu constitué d'une couche de fibres synthétiques recouvertes de silicate expansé. De tels panneaux sont utilisables tels quels, ou assemblés en stratifié à l'aide d'une feuille intercalaire en aluminium, assurant une certaine rigidité à l'ensemble.

L'invention a pour but un panneau composite thermoformé à base de fibres liées résistant à haute température et présentant une tenue aux vibrations. Le panneau composite selon l'invention est constitué au moins par une couche de fibres liées par un liant minéral, une feuille intercalaire en un matériau étanche à l'eau et à la vapeur d'eau et une couche de fibres liées par un liant organique polymérisé. De préférence, le panneau est revêtu sur ses deux faces ou au moins sur sa face froide d'une feuille d'aluminium.

La feuille intercalaire étanche empêche l'eau libérée lors du formage par le liant minéral de pénétrer dans la couche de liant organique ce qui nuirait à la polymérisation de la résine car cette réaction chimique de polymérisation conduit à un dégagement de molécules d'eau et ne se produit qu'après une phase de séchage.

Les fibres liées par un liant minéral sont de préférence des fibres que nous qualifierons ultérieurement de "réfractaires", c'est à dire ayant une bonne tenue à plus de 300°C, par exemple du type fibres silicoalumineuses (fibres céramiques), fibres d'amiante, fibres de roche basaltique, fibres de laitier de haut fourneau, fibres d'aramides, fibres de verre, ou encore un mélange de ces différentes fibres. Leur résistance thermique à plus de 1000°C conduit à préférer plus particulièrement les fibres céramiques.

A titre de liant minéral, on utilise plus particulièrement un silicate alcalin, silicate d'éthyle, silice ou alumine colloïdale, liants phosphatés notamment phosphate d'alumine ou phosphate de magnésie. Les dérivés silicatés sont plus particulièrement préférés dans la mesure où ils sont compatibles avec l'aluminium matériau convenant plus particulièrement pour former la barrière d'étanchéité entre les deux couches fibreuses.

Les fibres liées par un liant organique polymérisé peuvent être choisies parmi le groupe de fibres réfractaires énoncé précédemment en choisissant de préférence celles de ces fibres qui sont le moins onéreuses et qui permettent d'obtenir une couche présentant une bonne résistance mécanique. On peut aussi utiliser des fibres végétales par exemple en coton ou en cellulose ou tout autre type de fibres naturelles ou artificielles résistantes à des températures inférieures ou égales à 300°C. De préférence, on utilise des fibres de verre produites par centrifugation et étirage aux moyens d'un courant gazeux à haute température et à vitesse élevée conformément au procédé de fibrage décrit dans la brevet EP 91866, suivant une technique usuelle pour la fabrication de matelas isolants ; le liant organique étant pulvérisé sur les fibres dans la hotte de fibrage. Les matelas utilisés ont de préférence une masse surfacique comprise entre 450 et 2000 g/m². 

Le liant organique est thermodurcissable, de préférence du type résine urée-formol, formo-phénolique, mélanine-formol, résine phénolformaldéhyde modifiée ou non à l'urée, ou toute autre résine utilisée dans l'industrie des fibres de verre.

Comme indiqué précédemment la barrière d'étanchéité à l'eau et à la vapeur d'eau disposée entre les deux couches de fibre est de préférence en aluminium, quoique des plaques souples de tôle emboutie puissent être employées. Côté fibres réfractaires, le liant minéral est en règle générale bien compatible avec l'aluminium ce qui assure un parfait collage. Côté face froide on emploiera par exemple une colle silicate si la température de cette interface est en continu supérieure à 250°C.

Les feuilles de parement, par exemple en aluminium ou en inox, sont collées aux couches de matériaux fibreux de manière identique. Outre qu'elles confèrent au produit moulé un certain cachet esthétique, ces feuilles de parement protègent les couches de matériaux fibreux des salissures, de l'eau, de l'huile et des déchirures dues par exemple aux gravillons. De plus le produit moulé est ainsi plus agréable au toucher pour les ouvriers chargés de sa mise en place. L'aluminium s'oxydant pour des températures supérieures à 600°C, seule la face froide du produit sera revêtue pour les applications haute température. Notons également que l'aluminium a un grand pouvoir réfléchissant de la chaleur ce qui améliore l'efficacité de l'écran thermique constitué par le panneau composite.

Le panneau composite est préparé par thermoformage en une passe d'un stratifié comportant successivement une feuille de parement par exemple en aluminium (facultatif), une nappe humide en fibres réfractaires imprégnée à coeur d'un liant minéral, une feuille étanche à l'eau et à la vapeur d'eau de préférence en aluminium, éventuellement une couche d'adhésif aluminium-laine de verre du type silicate, un matelas de fibres imprégné d'une résine organique à l'état non polymérisé et de façon facultative, une autre feuille de parement et son adhésif. Le formage est effectué avec un moule et un contre-moule porté à une température comprise entre 200 et 250°C, pendant une durée de 3 à 15 minutes, le stratifié étant soumis à une force de pression de l'ordre de 3 kg par cm² (0,294 MPa).

Il est préférable d'utiliser une nappe en fibres réfractaires imprégnées d'un liant minéral ayant une teneur initiale en eau comprise entre 10 et 80 % et de préférence voisine de 30 %. Avec une teneur en eau inférieure à 10 %, la couche de fibres réfractaires est trop cassante pour être moulable ; d'autre part pour des teneurs en eau trop importantes, la quantité de vapeur qui se dégage au cours du formage est telle qu'étant donné la pression et la température du moule, il se crée une force de contre-pression qui s'oppose à la fermeture du moule et le panneau obtenu après thermoformage présente un aspect non satisfaisant, avec des formes ne correspondant pas aux caractéristiques souhaitées.

Pour une bonne polymérisation et conservation de la résine organique, celle-ci ne doit pas être en contact avec de la vapeur d'eau ou de l'eau liquide. La couche de fibres imprégnée de résine organique est donc protégée de la couche comportant un liant minéral par une feuille étanche, de préférence en aluminium, comme indiqué précédemment, cette feuille étanche permet l'obtention d'un produit composite présentant les avantages des fibres réfractaires imprégnées d'un liant minéral, c'est à dire essentiellement une bonne résistance aux températures élevées et les avantages des fibres liées par une résine organique, c'est-à-dire essentiellement une bonne résistance mécanique.

Pour obtenir un parfait scellage des bords, la couche de fibres réfractaires peut avantageusement ne pas s'étendre jusqu'aux limites de la pièce composite mais s'arrêter à quelques millimètres voir quelques centimètres si une partie seulement de la pièce est susceptible d'être exposée aux températures les plus élevées. Les fibres de verre ou les fibres végétales peuvent en effet être comprimées très fortement pour former des bords amincis ce qui n'est que partiellement vrai pour les fibres liées avec un liant minéral. De plus, le panneau a un comportement aux vibrations d'autant meilleur qu'il est léger et le liant minéral est l'élément qui contribue le plus au poids du panneau composite. Pour ces raisons et également pour des considérations financières les panneaux composites peuvent ne comporter de couches en fibres réfractaires avec liant minéral que dans certaines zones choisies, les plus exposées aux hautes températures, sans sortir pour autant du cadre de l'invention.

Des exemples de panneaux composites sont décrits ci-après.

Exemple 1 :

On fabrique un panneau plan destiné à servir d'éprouvettes, rectangulaire de 175 mm de long, 160 mm de large et de 1 cm d'épaisseur après moulage.

Pour cela, on prépare un stratifié comportant l'empilement suivant :

— une feuille d'aluminium de 0,1 mm d'épaisseur,

— une nappe humide de 25 mm d'épaisseur à base de fibres céramiques dans la composition chimique desquelles entre après séchage 45% de $SiO_2$ et 49 % de $Al_2O_3$ (fibres "KERLANE 45", marque déposée de la société KERLANE). La nappe est imprégnée à coeur d'un mélange de silice et d'alumine colloïdale. La teneur en eau est de 30%, la masse surfacique des fibres céramiques est de 6,5 kg/m², celle du liant minéral de 1,4 kg/m$^2$.
— une feuille d'aluminium de 0,05 mm d'épaisseur,
— un primitif formé de fibres de verre obtenues conformément au procédé de fibrage décrit dans le brevet EP 91866 et recueillies de manière classique pour les procédés de fabrication de matelas d'isolation, avec incorporation du liant au moment du fibrage (teneur en liant non polymérisé d'environ 17 % ; résine du type résol modifiée à l'urée présentant un rapport moléculaire formaldéhyde, phénol d'environ 3).
La masse surfacique des fibres de verre est de 1500 g/m$^2$ et la teneur en eau de 3 %.
— une feuille d'aluminium de 0,1 mm d'épaisseur.

Le stratifié est moulé en une passe dans une presse à butée avec un moule et un contre-moule parcourus par un fluide caloporteur qui assure un chauffage uniforme à 200°C. Le pressage est maintenu pendant 7 minutes.

La pièce composite obtenue à un bel aspect. Les couches sont parfaitement collées les unes aux autres et la pièce a une bonne résistance aux vibrations. (Après 600 heures la perte de masse est inférieure à 1%, si on soumet la pièce à des vibrations de 2 mm d'amplitude, sous une fréquence égale à 50 Hz.

## Example 2 :

On opère dans les mêmes conditions qu'à l'exemple 1 mais cette fois pour le formage d'une pièce en forme destinée à recouvrir la tête d'un pot d'échappement catalytique pour un véhicule automobile. La pièce présente les caractéristiques recherchées.

## Exemple 3 :

On opère dans les mêmes conditions qu'à l'exemple 2, mais cette fois avec une teneur en eau de la nappe céramique est égale à 300 %. La pièce n'est pas conforme au moule dans les zones les plus fortement bombées.

## Exemple 4 :

On opère dans les mêmes conditions qu'à l'exemple 2, mais cette fois avec une teneur en eau de la nappe céramique égale à 5%. La nappe céramique se détériore au cours du formage.

## Exemple 5 :

On opère dans le mêmes conditions qu'à l'exemple 2 mais en supprimant les feuilles de parement en aluminium. La pièce est conforme au gabarit. Seule la qualité esthétique du panneau est affectée.

## Revendications

1. Panneau composite moulé constitué par au moins une couche de fibres imprégnée d'un liant minéral et une couche de fibres imprégnée d'un liant organique, caractérisé en ce qu'une feuille intercalaire en un matériau étanche à l'eau et à la vapeur d'eau est disposée entre lesdites couches.

2. Panneau composite selon la revendication 1, caractérisé en ce que les fibres de la couche imprégnée d'un liant minéral sont choisies parmi le groupe des fibres silicoalumineuses, fibres d'amiante, fibres de roche basaltique, fibres de laitier de haut fourneau, fibres d'aramides, fibres de verre ou parmi un mélange de ces fibres.

3. Panneau composite selon la revendication 1, caractérisé en ce que les fibres de la couche imprégnée d'un liant organique sont choisies parmi le groupe des fibres silicoalumineuses, fibres d'amiante, fibres de roche basaltique, fibres de laitier de haut fourneau, fibres d'aramides, fibres de verre, fibres de celluloses, fibres coton ou parmi un mélange de ces fibres.

4. Panneau composite selon la revendication 1, caractérisé en ce que le liant minéral est choisi parmi le groupe suivant : silicate d'éthyle, silicate alcalin, silice colloïdale, alumine colloïdale, phosphate d'alumine, phosphate de magnésie.

5. Panneau composite selon la revendication 1, caractérisé en ce que la feuille intercalaire est en aluminium.

6. Panneau composite moulé selon la revendication 1, caractérisé en ce que le panneau est revêtu au moins sur sa face froide d'une feuille de parement, par exemple en aluminium.

7. Panneau composite selon la revendication 1, caractérisé en ce que le panneau ne comporte de couche en fibres imprégnée d'un liant minéral que dans les zones du panneau susceptibles d'être exposées à haute température.

8. Procédé d'obtention d'un panneau composite caractérisé en ce qu'on presse en une seule passe entre un moule et un contre-moule échauffé à une température comprise entre 100 et 250°C, un stratifié constitué par une nappe humide de fibres réfractaires imprégnée d'un liant minéral, une feuille intercalaire étanche, et un matelas de fibres de verre imprégné d'un liant organique thermodurcissable ; les polymérisations du liant minéral et du liant organique étant achevées à la fin du thermoformage.

9. Procédé selon la revendication 7, caractérisé en ce que ladite nappe humide a une teneur en eau comprise entre 10 et 80%, et de préférence voisine de 30%.

## Patentansprüche

1. Form-Verbundplatte, die mindestens aus einer Faserschicht, die mit einem mineralischen Bindemittel inprägniert ist, und einer Faserschicht besteht, die mit einem organischen Bindemittel imprägniert ist, dadurch gekennzeichnet, daß zwischen den beiden Schichten eine Zwischenschicht angeordnet ist, die aus einem Material besteht, das gegenüber wasser und Wasserdampf abdichtet.

2. Verbundplatte nach Anspruch 1, dadurch gekennzeichnet, daß die Fasern der mit einem mineralischen Bindemittel imprägnierten Schicht aus der Gruppe der Tonerdesilikat-Fasern, der Asbestfasern, der Fasern aus Basaltstein, der Fasern aus Hochofenschlacke, der Aramidfasern, der Glasfasern oder aus einer Mischung dieser Fasern gewählt sind.

3. Verbundplatte nach Anspruch 1, dadurch gekennzeichnet, daß die Fasern der mit einem organischen Bindemittel imprägnierten Schicht aus der Gruppe der Tonerdesilikat-Fasern, der Asbestfasern, der Fasern aus Basaltstein, der Fasern aus Hochofenschlacke, der Aramidfasern, der Glasfasern, der Zellstoffasern, der Baumwollfasern oder aus einem Mischung dieser Fasern gewählt sind.

4. Verbundplatte nach Anspruch 1, dadurch gekennzeichnet, daß das mineralische Bindemittel aus der folgenden Gruppe gewählt ist : Ethylensilikat, alkalinem Silikat, Kolloidsilikat, Kolloidaluminium, Aluminiumphosphat, Magnesiumphosphat.

5. Verbundplatte nach Anspruch 1, dadurch gekennzeichnet, daß die Zwischenschicht aus Aluminium besteht.

6. Form-Verbundplatte nach Anspruch 1, dadurch gekenn zeichnet, daß die Platte wenigstens auf ihrer kalten Seite mit einem Außenverkleidungsblatt, das beispiels weise aus Aluminium besteht, verkleidet ist.

7. Verbundplatte nach Anspruch 1, dadurch gekennzeichnet, daß die Platte nur in denjenigen Bereichen der Platte, die einer hohen Temperatur aussetzbar sind, mit mineralischem Bindemittel imprägnierte Faserschichten aufweist.

8. Verfahren zum Herstellen einer Verbundplatte, dadurch gekennzeichnet, daß zwischen einer Preßform und einer Gegen-Preßform, die auf eine in einem Bereich zwischen 100 und 250°C liegende Temperatur erwärmt sind, in einem einzigen Durchgang eine Schichtplatte gepreßt wird, die aus einem feuchten, mit einem mineralischen Bindemittel imprägnierten Vlies aus widerstandsfähigen Fasern, einem abdichtenden Zwischenblatt sowie aus einer mit einem organischen, wärmeaushärtenden Bindemittel imprägnierten Matte aus Glasfasern besteht, wobei die jeweilige Polymerisation des mineralischen bzw. des organischen Bindemittels am Ende der Wärmeformung erzielt wird.

9. Verfahren nach Anspruch 8, dadurch gekennzeichnet, daß das feuchte Vlies einen Wassergehalt aufweist, der im Bereich zwischen 10 und 80%, vorzugsweise in der Nähe von 30% liegt.

## Claims

1. Composite moulded panel consisting of at least one layer of fibres impregnated with a mineral binder and a layer of fibres impregnated with an organic binder, characterised in that an intermediate sheet of material impervious to water and water vapour is disposed between the said layers.

2. Composite panel according to claim 1, characterised in that the fibres of the layer impregnated with a mineral binder are selected from among the group of alumino-silicate fibres, asbestos fibres, basaltic rock fibres, blast furnace slag fibres, aramid fibres, glass fibres or from a mixture of these fibres.

3. Composite panel according to claim 1, characterised in that the fibres of the layer impregnated with with an organic binder are selected from among the group of alumino-silicate fibres, asbestos fibres, basaltic rock fibres, blast furnace slag fibres, aramid fibres, glass fibres, cellulose fibres, cotton fibres, or from a mixture of these fibres.

4. Composite panel according to claim 1, characterised in that the mineral binder is selected from the following group : ethyl silicate, alkali silicate, colloidal silicate, colloidal aluminium, aluminium phosphate, manganesium phosphate.

5. Composite panel according to claim 1, characterised in that the intermediate sheet is made of aluminium.

6. Composite moulded panel according to claim 1, characterised in that the panel is coated, at least on its cold face, with a facing sheet, for example made of aluminium.

7. Composite panel according to claim 1, characterised in that the panel only has a covering of fibres impregnated with a mineral binder in those areas of the panel likely to be exposed to high temperatures.

8. Process for obtaining a composite panel, characterised in that a layered structure consisting of a damp sheet of refractory fibres impregnated with a mineral binder, an impervious intermediate sheet, and a mat of glass fibres impregnated with an organic thermosetting binder, is pressed in a single pass between a mould and a countermould heated to a temperature of between 100 and 250°C ; the mineral binder and the organic binder polymerising at the end of the thermoforming process.

9. Process according to claim 7, characterised in that the said damp sheet has a water content of between 10 and 80%, and preferably of approximately 30%.